# FASCICULE DE BREVET EUROPEEN

(11) **EP 2 593 254 B1**
(45) Date de publication et mention de la délivrance du brevet: **03.10.2018**
(21) Numéro de dépôt: 11743844.0
(22) Date de dépôt: 11.07.2011
(51) Int. Cl.: B22F 3/15, C22C 47/06, B22F 5/04, D04C 1/06, F01D 5/28

(54) **PROCEDE DE REALISATION D'UNE PIECE MASSIVE**
VERFAHREN ZUR HERSTELLUNG EINES FESTEN TEILS
METHOD FOR PRODUCING A SOLID PART

(30) Priorité: 12.07.2010 FR 1055686; 12.07.2010 FR 1055685
(43) Date de publication de la demande: 22.05.2013
(73) Titulaire: Safran Aircraft Engines, 75015 Paris (FR)
(72) Inventeur: DAMBRINE, Bruno, Jacques, Gérard, F-77550 Moissy-Cramayel Cedex (FR); PERROUX, Alain, Robert, Yves, F-77550 Moissy-Cramayel Cedex (FR); GODON, Thierry, F - 77550 Moissy - Cramayel Cedex (FR)
(74) Mandataire: Camus, Olivier Jean-Claude
(86) Numéro de dépôt international: PCT/FR2011/051647
(87) Numéro de publication internationale: WO 2012/007682

(56) Documents cités:
- EP-A1- 0 159 405
- EP-A1- 1 526 285
- EP-A1- 1 908 919
- EP-A2- 1 306 459
- EP-A2- 1 576 929
- WO-A1-2004/007833
- WO-A2-2010/061139
- JP-A- H0 193 104
- US-A- 826 063
- US-A- 5 013 216
- US-B2- 7 211 109

## Description

La présente invention concerne un procédé de réalisation d'une pièce massive, telle que par exemple un renfort métallique d'aube de turbomachine.

Plus particulièrement l'invention concerne un procédé de réalisation d'un renfort métallique de bord d'attaque d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord d'attaque ou un bord de fuite d'aube de tout type de turbomachine, terrestre ou aéronautique, et notamment un turbomoteur d'hélicoptère ou un turboréacteur d'avion mais également d'hélices telles que des hélices de double soufflantes contrarotatives non carénées (« open rotor » en langue anglaise).

L'invention est également applicable à la réalisation de toutes pièces massives de forme géométrique complexe.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Les aubes de turbomachine, et notamment les aubes de soufflante, subissent d'importantes contraintes mécaniques, liées notamment à la vitesse de rotation, et doivent satisfaire à des conditions strictes de poids et d'encombrement. Par conséquent, on utilise des aubes en matériaux composites qui sont plus légères et qui ont une meilleure tenue à la chaleur.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délaminage, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique en titane réalisée entièrement par fraisage à partir d'un bloc de matière.

Cependant, le renfort métallique d'un bord d'attaque d'aube est une pièce complexe à réaliser, nécessitant de nombreuses opérations de reprises et des outillages complexes impliquant des coûts de réalisation importants.

Il est connu de réaliser des pièces massives, et notamment des renforts métalliques d'aube de turbomachine à partir d'une structure fibreuse métallique tridimensionnelle réalisée par tissage de fils métallique et d'un procédé de pressage isostatique à chaud dans un outillage provoquant l'agglomération des fils métalliques de la structure fibreuse métallique de manière à obtenir une pièce massive ; ce procédé est décrit dans la demande de brevet FR0858098.

Classiquement, le tissage de la structure fibreuse est réalisé par tissage au moyen d'une pluralité de fils de chaîne et de fils de trame métalliques dont le diamètre des fils est de l'ordre de quelques dixièmes de millimètres, typiquement entre 0,05mm et 0,3mm.

Le tissage de la structure fibreuse devient complexe et difficile, voire même difficilement réalisable, dès lors que l'on souhaite réaliser une structure fibreuse métallique plus épaisse, c'est-à-dire avec des fils métalliques de diamètre plus importants, typiquement de diamètre supérieur à 0,4 mm.

En effet, il devient nettement plus difficile d'obtenir une déformation suffisante des fils de chaîne et de trame pour réaliser le tissage avec des fils, notamment en titane, de diamètre supérieur à 0,4 mm.

Une solution pour diminuer la rigidité des fils consiste à réaliser un traitement thermique des fils de façon à abaisser leur rigidité. Cependant, ce traitement thermique sous oxygène n'est pas applicable sur des fils en titane car il entraîne une oxydation des fils de titane ce qui dégrade la qualité de la pièce réalisée par pressage isostatique à chaud.

Pour remédier à cet inconvénient, une solution consiste à réaliser un traitement thermique sous vide, c'est-à-dire en absence d'oxygène. Cette solution permet de s'affranchir des problèmes d'oxydation du titane mais en revanche entraîne des difficultés de réalisation et de manutention car toutes les opérations doivent se réaliser sous vide.

Enfin, l'utilisation de fils de faibles diamètres (i.e. inférieurs à 0,4 mm) nécessite de réaliser de nombreuses structures fibreuses (de faible épaisseur) par tissage, puis de les superposer les unes sur les autres dans un outillage de façon à obtenir une épaisseur suffisante pour la réalisation de la pièce par compaction à chaud. Plus la pièce est massive plus le nombre de structures fibreuses nécessaires à la réalisation de la pièce sera important, ce qui augmente par conséquent le nombre d'opérations et par conséquent le coût de réalisation d'une telle pièce.

Dans ce contexte, l'invention vise à résoudre les problèmes mentionnés ci-dessus, en proposant un procédé de réalisation permettant de réaliser des pièces massives de forme complexe de plusieurs millimètres d'épaisseur de façon simple et rapide, tout en simplifiant la gamme de fabrication et en réduisant les coûts de réalisation d'une telle pièce.

A cette fin, l'invention propose un procédé de réalisation d'une pièce massive comportant successivement :
- une étape de tissage d'une structure fibreuse tridimensionnelle par tissage d'un fil de chaîne et d'un fil de trame, ledit tissage étant réalisé à partir de torons métalliques faisant office de fil de chaîne et de fil de trame, lesdits torons métalliques étant formés par une pluralité de brins métalliques torsadés entre eux autour de l'axe longitudinal du toron ;
- une étape de pressage isostatique à chaud de ladite structure fibreuse provoquant l'agglomération des torons métalliques de ladite structure fibreuse de manière à obtenir une pièce massive.

On entend par toron métallique un ensemble de brins métalliques torsadés entre eux de façon à former un câble métallique.

On entend par pièce massive, une pièce monobloc ne comportant pas de partie creuse et sans partie rapportée.

Grâce à l'invention, il est possible de réaliser une pièce massive et de forme complexe, telle qu'un renfort d'aube de turbomachine qui est une pièce vrillée et cambrée, de façon simple et rapide à partir d'un tissage d'une structure fibreuse formant une préforme du renfort métallique et d'un procédé de pressage ou compactage isostatique à chaud (HIP pour Hot Isostatic Pressing en langue anglaise) permettant d'obtenir une pièce compacte et sans porosité par la combinaison de déformation plastique, de fluage et de soudage diffusion.

Grâce au procédé selon l'invention, la structure fibreuse est une structure souple, facilement déformable manuellement. La structure fibreuse peut également être déformée plastiquement de façon manuelle, par exemple par pliage, ce qui permet de mettre en forme manuellement à froid (i.e à la température ambiante) la structure fibreuse lors de sa mise en place dans l'outillage.

La déformation manuelle à froid de la structure fibreuse permet de s'affranchir d'une déformation thermique source d'oxydation sous oxygène des brins de titane ainsi que de toute complexité de manipulation et de manutention de la pièce titane lors d'une déformation thermique sous vide.

Le tissage de la structure fibreuse au moyen de torons souples permet également de s'affranchir des problèmes de retour élastique important liés à la rigidité des fils à base titane de diamètre supérieur à 0,4 mm.

Ainsi, la déformation de la structure fibreuse souple est réalisée sans l'utilisation d'une plieuse, sans nécessité d'utiliser un forgeage à froid et/ou à chaud avec l'outillage de façon à imposer un angle particulier à la structure fibreuse.

Ce procédé de réalisation permet de générer la fabrication de pièces complexes par la réalisation de préformes tissées en torons métalliques avec réduction des coûts notamment par la diminution du nombre d'opération nécessaires à la réalisation d'une telle pièce.

Le procédé de réalisation de pièce massive selon l'invention peut également présenter une ou plusieurs des caractéristiques ci-dessous, considérées individuellement ou selon toutes les combinaisons techniquement possibles :
- ladite étape de tissage est réalisée à partir de torons métalliques formés par une pluralité de brins métalliques dont le diamètre de chaque brin est inférieur à 0,1 mm ;
- ladite étape de tissage est réalisée à partir de torons métalliques de diamètre égal ou supérieur à 0,5 mm ;
- ladite étape de tissage est réalisée à partir de torons métalliques de diamètre égal ou supérieur à 1 mm ;
- ladite étape de tissage est réalisée à partir de torons métalliques formés par une pluralité de brins métalliques en titane ou par une pluralité de brins métalliques de différentes matières ;
- ladite étape de tissage est réalisée à partir de torons métalliques formés par une pluralité de brins métalliques de différents diamètres ;
- préalablement à ladite étape de pressage isostatique à chaud, ledit procédé comporte une étape de mise en forme de ladite structure fibreuse, ladite mise en forme étant réalisée manuellement ;
- ladite mise en forme de ladite structure fibreuse est réalisée lors de la mise en place de ladite structure fibreuse dans un outillage ;
- préalablement à ladite étape de pressage isostatique à chaud, ledit procédé comporte une étape de nettoyage de ladite structure fibreuse ;
- ladite pièce massive est un renfort métallique de bord d'attaque ou de bord de fuite d'aube de soufflante turbomachine.

L'invention a également pour objet un procédé de réalisation d'une pièce massive creuse comportant successivement :
- une étape de tissage d'une structure fibreuse tridimensionnelle par tissage de fils et/ou de torons métalliques :
- une étape d'incorporation d'au moins un insert fugitif dans ladite structure fibreuse ;
- une étape de pressage isostatique à chaud de l'ensemble formé par ladite structure fibreuse et par ledit au moins un insert fugitif incorporé provoquant l'agglomération des fils métalliques de ladite structure fibreuse autour dudit au moins un insert fugitif, de manière à obtenir une pièce massive ;
- une étape d'attaque chimique dudit au moins un insert fugitif de manière à dissoudre ledit insert et à former une cavité interne dans ladite pièce massive, de façon à obtenir une pièce massive creuse.

On entend par « insert fugitif » un insert qui n'est pas destiné à être permanant et qui est seulement nécessaire à la réalisation du renfort métallique creux de bord d'attaque. L'insert fugitif n'est donc pas présent dans le renfort métallique dans son état final et ne participe aucunement aux caractéristiques mécaniques du renfort métallique.

Grâce à l'invention, la pièce massive creuse est réalisée de façon simple et rapide à partir d'un tissage d'une structure fibreuse formant une préforme du renfort métallique et d'un procédé de pressage ou compactage isostatique à chaud (HIP pour Hot Isostatic Pressing en langue anglaise) permettant d'obtenir une pièce compacte et sans porosité par la combinaison de déformation plastique, de fluage et de soudage diffusion.

L'incorporation d'un insert fugitif dans la structure fibreuse permet de créer une zone délimitée dans laquelle, la matière métallique de la structure fibreuse ne peut fluer lors de l'étape de pressage isostatique à chaud. Cet insert, réalisé dans un matériau différent de la structure fibreuse, est ensuite dissout par une attaque chimique de façon à créer une cavité interne dans la pièce massive et donc d'obtenir une pièce allégée.

Avantageusement, la pièce massive creuse est un renfort métallique creux de bord d'attaque ou de bord de fuite.

Ce procédé de réalisation permet ainsi de s'affranchir de la réalisation complexe du renfort par usinage dans la masse, de type fraisage, brochage, à partir de méplats nécessitant de grand volume de matière de mise en oeuvre et par conséquent des coûts importants en approvisionnement de matière première et permet de réaliser facilement des renforts métalliques respectant des exigences strictes de masse et/ou géométriques.

Le procédé de réalisation d'une pièce massive creuse selon l'invention peut également présenter une ou plusieurs des caractéristiques ci-dessous, considérées individuellement ou selon toutes les combinaisons techniquement possibles :
- ladite pièce massive creuse est un renfort métallique creux de bord d'attaque ou de bord de fuite d'aube de soufflante turbomachine ou d'hélice :
- préalablement à ladite étape de pressage isostatique à chaud, ledit procédé comporte une étape de mise en place dudit ensemble dans un outillage ;
- on réalise simultanément ladite mise en place dudit ensemble et une mise en forme dudit ensemble dans ledit outillage ;
- ledit procédé comporte une étape préalable de pré-déformation de l'ensemble au moyen d'un outillage de déformation ;
- préalablement à ladite étape de pressage isostatique à chaud, ledit procédé comporte une étape de dégraissage dudit ensemble ;
- ladite étape d'attaque chimique est réalisée par trempage de ladite pièce massive, obtenue lors de l'étape de pressage à chaud, dans un bain d'agent chimique ;
- ladite étape d'incorporation dudit au moins un insert fugitif est réalisée par la mise en place dudit au moins un insert fugitif entre deux préformes indépendantes formant ladite structure fibreuse réalisée lors de l'étape de tissage ;
- ladite étape d'incorporation dudit au moins un insert fugitif est réalisée par l'enroulement d'une préforme monocouche, formant ladite structure fibreuse réalisée lors de l'étape de tissage, autour dudit insert fugitif ;
- ladite étape d'incorporation dudit au moins un insert fugitif est réalisée par la mise en place dudit au moins un insert fugitif dans une cavité via une fente préalablement formée dans une préforme monocouche formant ladite structure fibreuse lors de ladite étape de tissage de ladite structure fibreuse.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique de bord d'attaque obtenu au moyen du procédé de réalisation selon l'invention ;
- la figure 2 est une vue partielle en coupe d'un premier exemple de réalisation d'une aube comportant un renfort structurel métallique de bord d'attaque obtenu au moyen du procédé de réalisation selon l'invention, selon un plan de coupe AA illustré à la figure 1 ;
- la figure 3 est un schéma synoptique présentant les principales étapes d'un premier mode de réalisation d'un renfort structurel métallique de bord d'attaque d'aube de turbomachine du procédé de réalisation selon l'invention ;
- la figure 4 illustre une vue partielle en coupe du renfort métallique de bord d'attaque d'aube de turbomachine lors de la première étape du procédé illustré en figure 3 ;
- la figure 5 illustre une vue partielle en coupe du renfort métallique de bord d'attaque d'aube de turbomachine lors de la deuxième étape du procédé illustré en figure 3 ;
- la figure 6 illustre une vue partielle du renfort métallique de bord d'attaque d'aube de turbomachine lors de la troisième étape du procédé illustré en figure 3 ;
- la figure 7 est une vue partielle en coupe d'un second exemple de réalisation d'une aube comportant un renfort structurel métallique de bord d'attaque obtenu au moyen du procédé de réalisation selon l'invention, selon un plan de coupe AA illustré à la figure 1 ;
- la figure 8 est un schéma synoptique présentant les principales étapes d'un deuxième mode de réalisation d'un renfort structurel métallique creux de bord d'attaque d'aube de turbomachine du procédé de réalisation selon l'invention ;
- la figure 9 illustre une vue partielle en coupe du renfort métallique creux de bord d'attaque d'aube de turbomachine lors de la première étape du procédé illustré en figure 8 ;
- la figure 10 illustre une vue partielle en coupe du renfort métallique creux de bord d'attaque d'aube de turbomachine lors de la deuxième étape du procédé illustré en figure 8 ;
- la figure 11 illustre une vue partielle du renfort métallique creux de bord d'attaque d'aube de turbomachine lors de la troisième étape du procédé illustré en figure 8 ;
- la figure 12 illustre une vue partielle du renfort métallique creux de bord d'attaque d'aube de turbomachine lors de la quatrième étape du procédé illustré en figure 8 ;
- la figure 13 illustre une vue partielle du renfort métallique creux de bord d'attaque d'aube de turbomachine lors de la cinquième étape du procédé illustré en figure 8.

Dans toutes les figures, les éléments communs portent les mêmes numéros de référence sauf précision contraire.

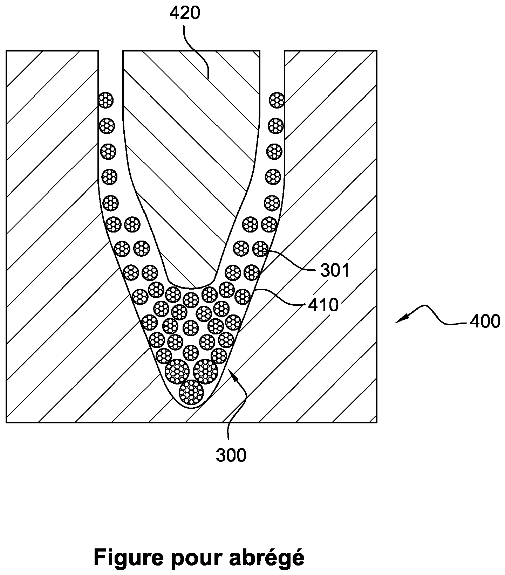

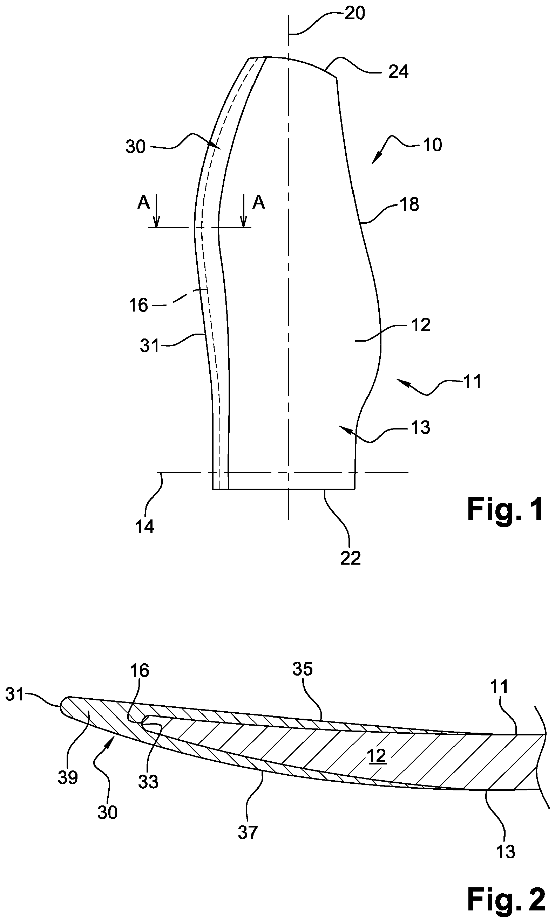

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seule la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par drapage ou mise en forme d'une texture fibreuse tissée. A titre d'exemple, le matériau composite utilisé peut être composé par un assemblage de fibres tissées de carbone et d'une matrice résineuse, l'ensemble étant formé par moulage au moyen d'un procédé d'injection de résine de type RTM (pour « Resin Transfer Molding »).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou amincie en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base titane. Ce matériau présente en effet une grande capacité d'absorption de l'énergie due aux chocs. Le renfort est collé sur l'aube 10 au moyen de colle connue de l'homme du métier, comme par exemple une colle cyanoacrylique ou encore époxy.

Ce type de renfort structurel métallique 30 utilisé pour le renfort d'aube composite de turbomachine est plus notamment décrit dans la demande de brevet EP1908919.

Le procédé selon l'invention permet de réaliser notamment un renfort structurel tel qu'illustré à la figure 2, la figure 2 illustrant le renfort 30 dans son état final.

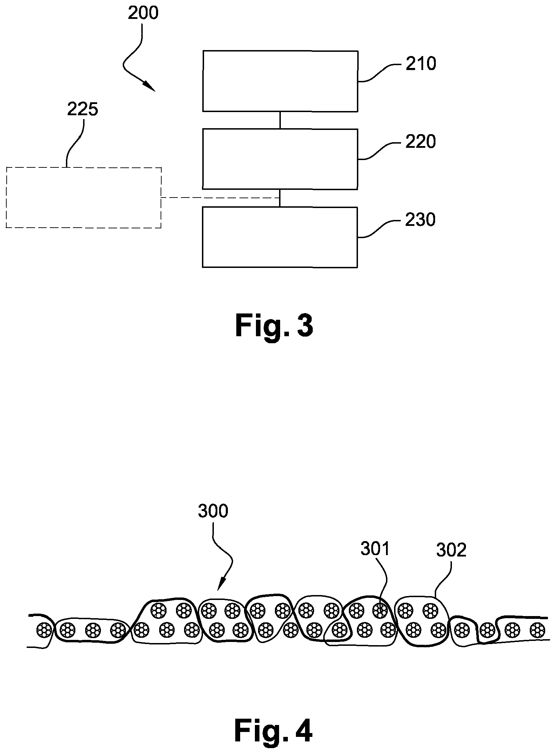

La figure 3 représente un schéma synoptique illustrant les principales étapes d'un procédé de réalisation 200 selon l'invention pour la réalisation d'un renfort structurel métallique 30 de bord d'attaque d'aube 10 tel qu'illustré aux figures 1 et 2.

La première étape 210 du procédé de réalisation 200 est une étape de tissage d'une structure fibreuse 300 tridimensionnelle par tissage de torons métalliques 301, 302, illustré à la figure 4.

L'étape 210 de tissage permet de réaliser une ou plusieurs structure(s) fibreuse(s) métallique(s) 300 en trois dimensions permettant de réaliser la pièce finale.

A ce titre, la structure fibreuse 300 est formée par une pluralité de torons 301, 302 tissés faisant office de «fil de chaîne» et de «fil de trame ».

Le diamètre des torons métalliques 301, 302 peut varier en fonction des besoins de l'utilisateur, et de l'épaisseur matière nécessaire pour la réalisation de la pièce. La détermination du diamètre du toron est réalisée en fonction d'un compromis entre souplesse de la structure fibreuse et épaisseur matière nécessaire dans l'outillage.

Le diamètre des torons 301, 302 et la nature des brins les constituants peuvent également varier notamment entre les torons aptes à former les fils de chaîne 301 et les torons aptes à former les fils de trame 302.

Les torons métalliques 301, 302 sont formés à partir d'une pluralité de brins métallique torsadés, tressés ou enroulés en hélice autour de l'axe longitudinal du toron. Avantageusement, chaque brin métallique formant le toron comporte un diamètre inférieur à 0,1 mm. Le principe de réalisation des torons métalliques est avantageusement le principe de réalisation des câbles métalliques tressés à partir de brins métalliques torsadés.

A titre d'exemple, le toron métallique 301, 302 comporte entre 20 et 30 brins enroulés.

L'utilisation de torons métalliques 301, 302 formés par une pluralité de brins métalliques enroulés permet ainsi d'obtenir un toron souple et déformable manuellement à froid (i.e par exemple à la température ambiante).

En réalisant des torons métalliques de diamètre supérieur à 0,5 mm, et même de quelques millimètres, les torons métalliques 301, 302 restent suffisamment souples pour permettre leur manipulation, leur déformation manuelle, et le tissage d'une structure fibreuse 300 sans difficulté.

Les motifs de tissage de la structure fibreuse 300 sont classiquement des motifs de tissage utilisés par exemple dans le domaine du tissage de fibres composites comme par exemple les motifs de tissage décrits dans la demande de brevet EP1526285.

Les brins métalliques utilisés pour la réalisation des torons 301, 302 sont principalement des brins à base titane. Toutefois, il est possible d'incorporer dans le tissage des brins à base de carbure de silicium et de titane (SiC-Ti), des brins enduits de Bore (SiC-Bore), ou encore de Carbure de Silicium (SiC-SiC).

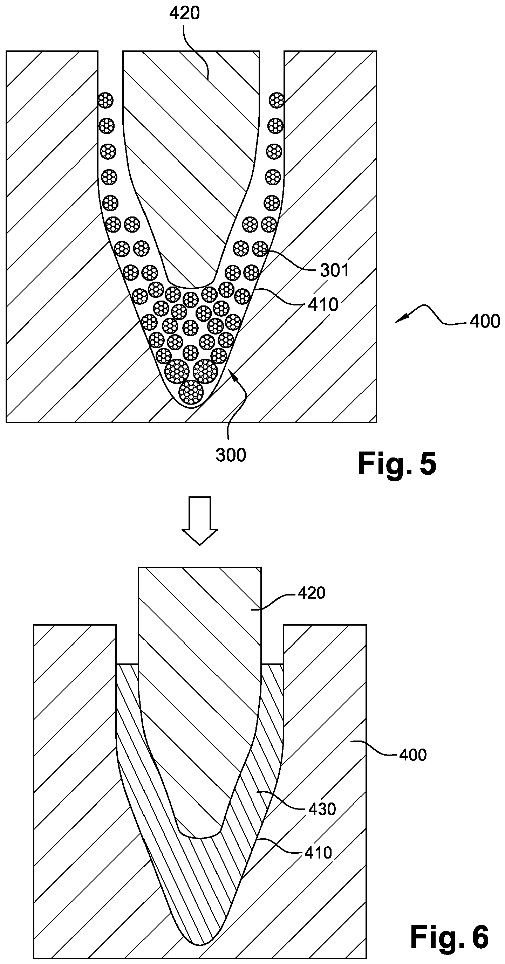

La deuxième étape 220 du procédé de réalisation 200, illustrée à la figure 5, est une étape de mise en forme de la structure fibreuse 300 dans un outillage 400. Avantageusement, la mise en forme de la structure fibreuse 300 est réalisée manuellement lors de sa mise en place dans l'outillage 400.

L'outillage 400 comporte une empreinte (matrice) 410 et une contre-empreinte (poinçon) 420 correspondant à la forme finale de la pièce à réaliser.

La structure fibreuse 300 réalisée lors de l'étape précédente est une structure souple, facilement déformable manuellement. La structure fibreuse 300 est également déformable plastiquement de façon manuelle, par exemple par pliage, ce qui permet de mettre en forme manuellement la structure fibreuse 300 lors de sa mise en place dans l'outillage.

La troisième étape 230 du procédé de réalisation est une étape de pressage isostatique à chaud (HIP pour Hot Isostatic Pressing en langue anglaise) de la structure fibreuse dans l'outillage, illustrée à la figure 6.

Le pressage isostatique à chaud est un procédé de fabrication très utilisé et connu pour réduire la porosité des métaux et influer sur la densité de nombreux métaux, tels que les céramiques. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de la structure fibreuse 300, ainsi que les microporosités au moyen d'une combinaison de déformation plastique, de fluage, et de soudage diffusion de façon à former une pièce massive 430.

Dans le cas de réalisation d'un renfort métallique d'aube de turbomachine, la pièce massive 430, résultant de l'étape de pressage isostatique, comporte les profils, interne et externe, du renfort métallique 30. La pièce massive 430 est ensuite démoulée de l'outillage 400.

L'étape de pressage isostatique est réalisée sous vide, avantageusement sous vide secondaire soit dans un outillage soudé dans lequel le vide secondaire est réalisé, soit sous sac à l'autoclave ; le choix du procédé dépendant du nombre de pièces à produire. Le vide secondaire permet d'éviter la présence d'oxygène dans l'outillage et au niveau de la structure fibreuse, lors de l'étape de pressage isostatique du titane.

L'outillage est réalisé dans un alliage mécanique dit superalliage ou alliage à haute performance.

L'étape de pressage isostatique peut comporter préalablement une étape 235 de nettoyage, de dégraissage et/ou d'une attaque chimique de la structure fibreuse souple de façon à supprimer les impuretés résiduelles de la structure fibreuse.

Avantageusement, l'étape de nettoyage des impuretés est réalisée par trempage de l'ensemble fibreux dans un bain d'agent nettoyant ou d'agent chimique.

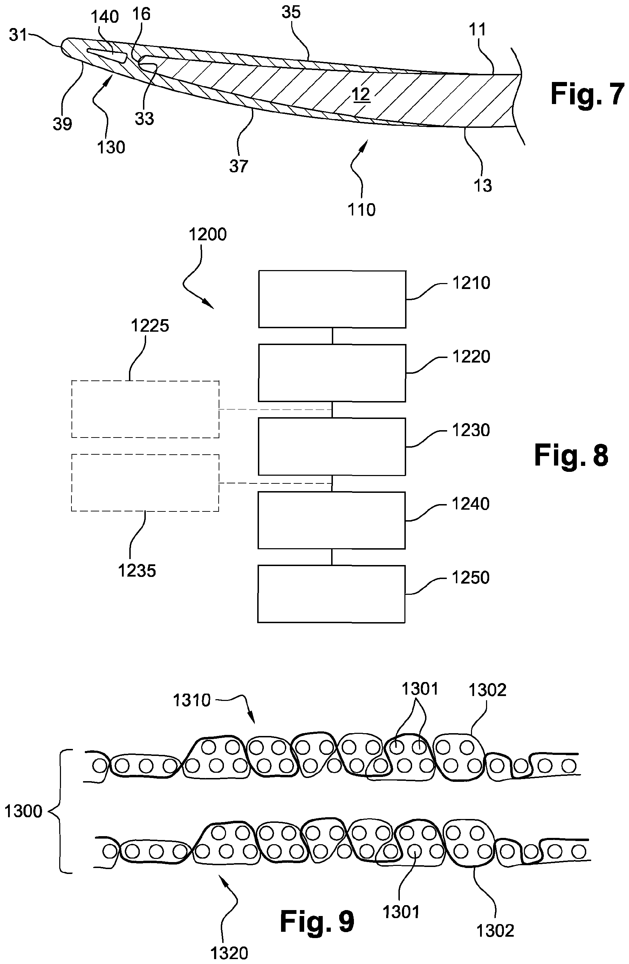

Selon un second exemple de réalisation de l'invention illustré aux figures 7 à 13, le procédé selon l'invention permet de réaliser un renfort structurel comportant une cavité interne tel qu'illustré à la figure 7, la figure 7 illustrant un second exemple de réalisation d'un renfort 130 dans son état final.

La figure 8 représente un schéma synoptique illustrant les principales étapes d'un seconde mode de réalisation du procédé de réalisation 1200 d'un renfort structurel métallique 130 de bord d'attaque d'aube 110 tel qu'illustré à la figure 7.

La première étape 1210 du procédé de réalisation 1200 est une étape de tissage d'une structure fibreuse 1300 tridimensionnelle par tissage de fils métalliques.

Cette première étape 1210 permet de réaliser au moins une préforme 1310, 1320 de fils métalliques 1301, 1302 tissés en trois dimensions de façon à former une structure fibreuse permettant de former à elle seule la préforme de la pièce finale.

Dans un premier mode de réalisation illustré à la figure 9, la structure fibreuse 1300 est une structure multicouches formée par une première préforme 1310 formant le flanc intérieur de la structure fibreuse 1300 et par une deuxième préforme 1320 formant le flanc supérieur de la structure fibreuse 1300. On entend par flanc intérieur, la partie de la structure fibreuse 1300 destinée à former la partie interne du renfort métallique en contact avec la surface 112 de l'aube (figure 7) et par flanc supérieur, la partie de la structure fibreuse 1300 qui est destinée à former la partie externe du renfort métallique 130.

Les motifs de tissage de la structure fibreuse 1300 sont classiquement des motifs de tissage utilisés par exemple dans le domaine du tissage de fibres composites comme par exemple les motifs de tissage décrits dans la demande de brevet EP1526285.

A ce titre, la structure fibreuse 1300 comporte une pluralité de fils de chaîne 1301 est une pluralité de fils de trame 1302.

Le titre des fils métalliques, du fil chaîne 1301 et/ou du fil de trame 1302, de la structure fibreuse peut varier en fonction des besoins de l'utilisateur, de la rigidité et de l'épaisseur matière du renfort métallique 130 nécessaire.

Les fils métalliques utilisés pour le tissage de la structure fibreuse 1300 sont principalement des fils de titane. Toutefois, il est possible d'incorporer dans le tissage de fils titane des fils à base de carbure de silicium et de titane (SiC-Ti), des fils enduits de Bore (SiC-Bore), ou encore de Carbure de Silicium (SiC-SiC).

Selon un autre mode de réalisation, la structure fibreuse 1300 peut être formée par une pluralité de torons tissés faisant office de « fil de chaîne » et de « fil de trame ». Le diamètre des torons métalliques peut varier en fonction des besoins de l'utilisateur, et de l'épaisseur matière nécessaire pour la réalisation de la pièce. La détermination du diamètre du toron est réalisée en fonction d'un compromis entre souplesse de la structure fibreuse et épaisseur matière nécessaire dans l'outillage. Le diamètre des torons et la nature des brins les constituants peuvent également varier notamment entre les torons aptes à former les fils de chaîne et les torons aptes à former les fils de trame. Les torons métalliques sont formés à partir d'une pluralité de brins métallique torsadés, tressés ou enroulés en hélice autour de l'axe longitudinal du toron. Avantageusement, chaque brin métallique formant le toron comporte un diamètre inférieur à 0,1 mm. Le principe de réalisation des torons métalliques est avantageusement le principe de réalisation des câbles métalliques tressés à partir de brins métalliques torsadés. A titre d'exemple, le toron métallique comporte entre 20 et 30 brins enroulés. L'utilisation de torons métalliques formés par une pluralité de brins métalliques enroulés permet ainsi d'obtenir un toron souple et déformable manuellement. En réalisant des torons métalliques de diamètre supérieur à 0,5 mm, et même de quelques millimètres, les torons métalliques restent suffisamment souples pour permettre leur manipulation, leur déformation manuelle.

Les brins métalliques utilisés pour la réalisation des torons sont principalement des brins à base titane. Toutefois, il est possible d'incorporer dans le tissage des brins à base de carbure de silicium et de titane (SiC-Ti), des brins enduits de Bore (SiC-Bore), ou encore de Carbure de Silicium (SiC-SiC).

Selon un deuxième mode de réalisation de l'invention, la structure fibreuse 300 est une structure monocouche formée par une unique préforme.

La deuxième étape 1220 du procédé de réalisation 1200 est une étape d'incorporation d'un insert 150 dans la structure fibreuse 1300 telle qu'illustré à la figure 5.

Lorsque la structure fibreuse 1300 est formée par deux de préformes indépendantes 1310, 1320, l'insert 150 est positionné entre les deux préformes formant deux couches de tissage. Dans ce cas, il peut être nécessaire lors de cette deuxième étape 1220 d'assembler les préformes indépendantes 1310, 1320 de façon à maintenir l'insert 150 en position.

L'assemblage des deux préformes indépendantes 1310, 1320 peut être réalisé par des fils de façon à former une couture entre les deux préformes indépendantes, par soudage par point de différents brins de torons ou encore par une géométrie de tissage spécifique d'un ou de plusieurs préformes, par exemple pour former une surépaisseur locale apte à former une butée et à maintenir en position l'insert.

Selon un autre mode de réalisation, l'insert fugitif peut également être accroché sur une ou plusieurs préformes à l'aide par exemple de picots venant s'enfoncer dans les préformes indépendantes 1310, 1320.

Enfin, l'insert fugitif peut simplement être maintenu dans l'outillage sans que les préformes indépendantes 1310, 1320 soient assemblées.

Lorsque la structure fibreuse est formée par une structure monocouche formée par une unique préforme, l'insert peut être incorporé par enroulement de la structure monocouche autour de l'insert ou encore par glissement de l'insert dans une cavité réalisée préalablement au moyen d'une fente prévu dans la structure monocouche lors de l'étape de tissage.

L'insert 150 est réalisé dans un matériau différent du matériau des fils métalliques utilisés pour le tissage de la structure fibreuse 1300. L'insert 150 est réalisé dans un matériau capable de résister à une haute température, de l'ordre de 900°C, une haute pression, de l'ordre de 1000 bar, et qui est compatible avec les matériaux des fils de tissage de façon à ne pas créer d'impuretés ou d'oxydation sur la structure fibreuse 1300.

Le matériau de l'insert 150 doit également pouvoir être attaqué chimiquement par dissolution au moyen d'un agent chimique.

Avantageusement, l'insert 150 est réalisé en cuivre, ou en quartz ou en silice.

La forme de l'insert 150 incorporé dans la structure fibreuse 1300 est identique à la forme de la cavité interne finale 140 illustré à la figure 7 et peut comporter toutes sortes de profil.

L'insert 150 est obtenu indifféremment par un procédé de forgeage, d'usinage, ou encore par coulé.

Selon un autre mode de réalisation, plusieurs inserts 150 sont incorporés à l'intérieur de la structure fibreuse 1300.

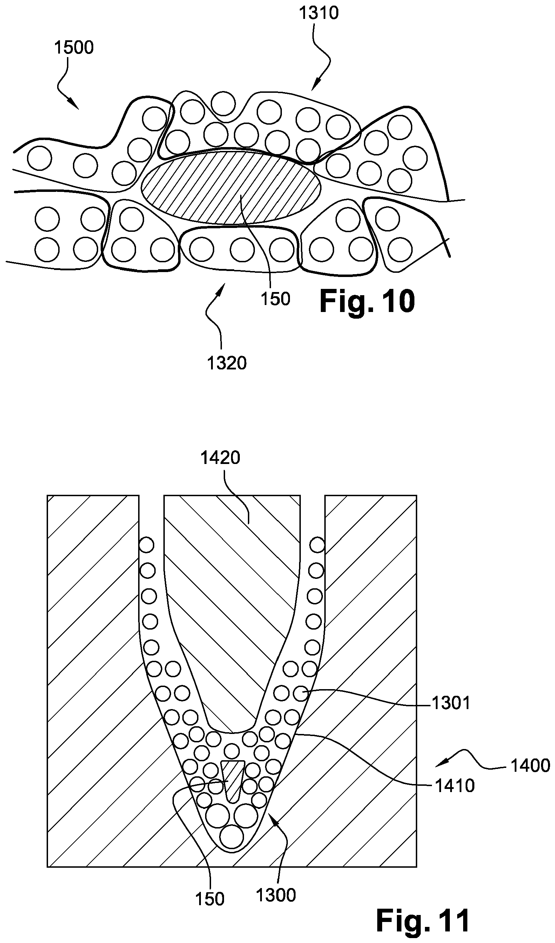

La troisième étape 1230 du procédé de réalisation 1200 est une étape de mise en place et de mise en forme de l'ensemble fibreux 1500 formé par la structure fibreuse 1300 et l'insert 150 dans un outillage 1400. Cette étape 1230 est illustrée particulièrement à la figure 11. L'outillage 1400 comporte une empreinte 1410 (matrice) correspondant à la forme externe finale du renfort métallique 130 et une contre-empreinte 1420 (poinçon) correspondant à la forme interne finale du renfort métallique de bord d'attaque.

Le procédé de réalisation 1200 peut comporter préalablement à la troisième étape de mise en place de l'ensemble fibreux dans l'outillage, une étape 1225 de pré-déformation dans un outillage spécifique. Cette étape de pré-déformation de l'ensemble fibreux peut être utile notamment lors de l'utilisation de fils métalliques de diamètre important.

Lorsque le tissage de la structure fibreuse est réalisé au moyen de torons souples, l'étape 1225 de pré-déformation n'est pas nécessaire. En effet, l'utilisation de torons permet de s'affranchir des problèmes de retour élastique important liés à la rigidité des fils à base titane de diamètre supérieur à 0,4 mm.

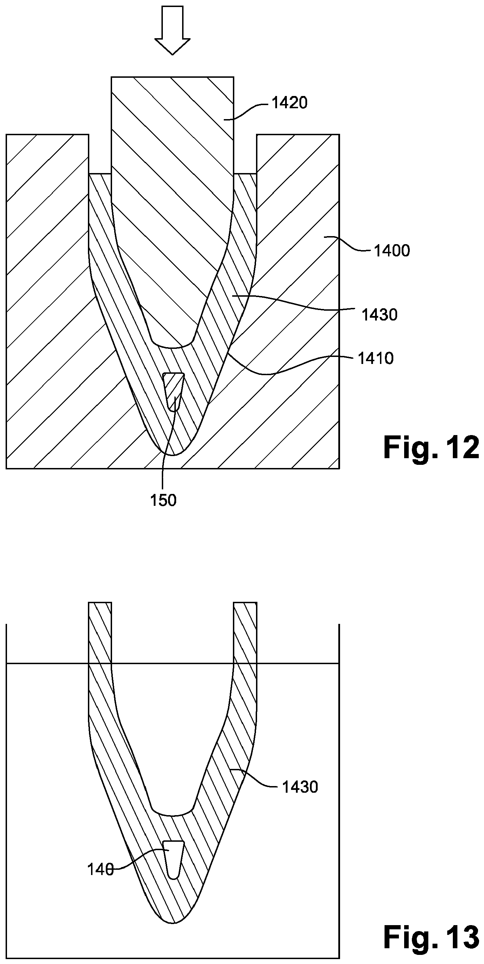

La quatrième étape 1240 du procédé de réalisation 1200 est une étape de pressage isostatique à chaud (HIP pour Hot Isostatic Pressing en langue anglaise) de l'ensemble fibreux 1500 dans l'outillage 1400, illustré à la figure 12.

Le pressage isostatique à chaud est un procédé de fabrication très utilisé et connu pour réduire la porosité des métaux et influer sur la densité de nombreux métaux, tels que les céramiques. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de la structure fibreuse 1300, ainsi que les microporosités au moyen d'une combinaison de déformation plastique, de fluage, et de soudage diffusion de façon à former une pièce massive 1430.

La pièce massive 1430 résultant de l'étape de pressage isostatique comporte les profils interne et externe du renfort métallique 130. La pièce massive 1430 est ensuite démoulée de l'outillage 1400.

L'étape de pressage isostatique est réalisée sous vide, avantageusement sous vide secondaire soit dans un outillage soudé dans lequel le vide secondaire est réalisé, soit sous sac à l'autoclave, le choix du procédé dépendant du nombre de pièce à produire. Le vide secondaire permet d'éviter la présence d'oxygène dans l'outillage et au niveau de la structure fibreuse, lors de l'étape de pressage isostatique du titane.

L'outillage 1400 est réalisé dans un alliage mécanique dit superalliage ou alliage à haute performance.

L'étape 1240 de pressage isostatique peut comporter préalablement une étape 1235 de nettoyage, de dégraissage et/ou d'une attaque chimique de l'ensemble fibreux 1500 de façon à supprimer les impuretés résiduelles de la structure fibreuse 1300.

Avantageusement, l'étape de nettoyage des impuretés est réalisée par trempage de l'ensemble fibreux dans un bain d'agent nettoyant ou d'agent chimique.

La cinquième étape 1250 du procédé de réalisation 1200 est une étape d'attaque chimique de l'insert 150 incorporé dans la matière de la pièce massive 1430 au moyen d'un agent chimique apte à attaquer le matériau dans lequel l'insert 150 est réalisé. Cette étape est illustrée à la figure 13.

L'attaque chimique de l'insert 150 permet de dissoudre l'insert 150 de sorte que l'espace libéré par l'insert 50 dissout forme la cavité interne 140 du renfort métallique 130 illustré à la figure 7.

Avantageusement, l'étape 1250 d'attaque chimique est réalisée par trempage de la pièce massive 1430 dans un bain comportant l'agent chimique apte à dissoudre l'insert 150.

L'agent chimique est par exemple un acide ou une base.

Avantageusement, l'agent chimique est apte à dissoudre le cuivre, le quartz ou encore la silice.

En association avec ces principales étapes de réalisation, et quel que soit le mode de réalisation de l'invention, le procédé selon l'invention peut également comporter une étape de finition et de reprise par usinage de la pièce massive obtenue à la sortie de l'outillage de façon à obtenir le renfort 30, 130. Cette étape de reprise comporte :
- une étape de reprise du profil de la base 39, 139 du renfort 30, 130 de façon à l'affiner et notamment du profil aérodynamique du bord d'attaque 31, 131 ;
- une étape de reprise des flancs 35, 135, 37, 137 ; cette étape consistant notamment au détourage des flancs 35, 135, 37, 137 et à l'amincissement des flancs intrados et extrados ;
- une étape de finition permettant d'obtenir l'état de surface requis.

En association avec ces principales étapes de réalisation, le procédé selon l'invention peut également comporter des étapes de contrôle non destructif du renfort 30, 130 permettant de s'assurer de la conformité géométrique et métallurgique de l'ensemble obtenu. A titre d'exemple les contrôles non destructifs peuvent être réalisés par un procédé par rayon X.

La présente invention a été principalement décrite avec l'utilisation de brins métalliques à base titane pour la réalisation de torons ; toutefois, le procédé de réalisation est également applicable avec tout type de brins métalliques.

Le procédé selon l'invention permet de réaliser de façon simple des pièces avec des géométries complexes et des épaisseurs variant sensiblement entre 0,1 et 70 mm. Ainsi, le procédé selon l'invention permet de réaliser tout aussi bien des pièces massives que des pièces de faible épaisseur.

L'invention a été particulièrement décrite pour la réalisation d'un renfort métallique d'une aube composite de turbomachine ; toutefois, l'invention est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, l'invention est également applicable pour la réalisation d'un renfort métallique d'un bord de fuite d'une aube de turbomachine ou encore à la réalisation d'un renfort métallique d'hélice en composite ou métallique.

Les autres avantages de l'invention sont notamment les suivants :
- réduction des coûts de réalisation ;
- réduction du temps de réalisation ;
- simplification de la gamme de fabrication ;
- réduction des coûts de matière.

## Revendications

1. Procédé de réalisation (200) d'une pièce massive (430) comportant successivement :
- une étape (210) de tissage d'une structure fibreuse (300) tridimensionnelle par tissage d'un fil de chaîne et d'un fil de trame, ledit tissage étant réalisé à partir de torons métalliques (301, 302) faisant office de fil de chaîne et de fil de trame, lesdits torons métalliques (301, 302) étant formés par une pluralité de brins métalliques torsadés entre eux autour de l'axe longitudinal du toron ;
- une étape (230) de pressage isostatique à chaud de ladite structure fibreuse (300) provoquant l'agglomération des torons métalliques de ladite structure fibreuse (300) de manière à obtenir une pièce massive (430).

2. Procédé de réalisation (200) selon la revendication 1 **caractérisé en ce que** ladite étape (210) de tissage est réalisée à partir de torons métalliques (301, 302) formés par une pluralité de brins métalliques dont le diamètre de chaque brin est inférieur à 0,1 mm.

3. Procédé de réalisation (200) selon l'une des revendications 1 à 2 **caractérisé en ce que** ladite étape (210) de tissage est réalisée à partir de torons métalliques (301, 302) de diamètre égal ou supérieur à 0,5 mm.

4. Procédé de réalisation (200) selon l'une des revendications 1 à 2 **caractérisé en ce que** ladite étape (210) de tissage est réalisée à partir de torons métalliques (301, 302) de diamètre égal ou supérieur à 1 mm.

5. Procédé de réalisation (200) selon l'une des revendications 1 à 4 **caractérisé en ce que** ladite étape (210) de tissage est réalisée à partir de torons métalliques (301, 302) formés par une pluralité de brins métalliques en titane ou par une pluralité de brins métalliques de différentes matières.

6. Procédé de réalisation (200) selon l'une des revendications 1 à 5 **caractérisé en ce que** ladite étape (210) de tissage est réalisée à partir de torons métalliques (301, 302) formés par une pluralité de brins métalliques de différents diamètres.

7. Procédé de réalisation (200) selon l'une des revendications 1 à 6 **caractérisé en ce que** préalablement à ladite étape (230) de pressage isostatique à chaud, ledit procédé comporte une étape (230) de mise en forme de ladite structure fibreuse (300), ladite mise en forme étant réalisée manuellement.

8. Procédé de réalisation (200) selon la revendication 7 **caractérisé en ce que** ladite mise en forme de ladite structure fibreuse (300) est réalisée lors de la mise en place de ladite structure fibreuse (300) dans un outillage (400).

9. Procédé de réalisation (200) d'un renfort métallique (30) d'aube de turbomachine selon l'une des revendications 1 à 8 **caractérisé en ce que** préalablement à ladite étape (230) de pressage isostatique à chaud, ledit procédé (200) comporte une étape de nettoyage (225) de ladite structure fibreuse (300).

10. Procédé de réalisation (200) selon l'une des revendications 1 à 9 **caractérisé en ce que** ladite pièce massive (430) est un renfort métallique (30) de bord d'attaque ou de bord de fuite d'aube de soufflante turbomachine ou d'hélice.

## Patentansprüche

1. Realisierungsverfahren (200) eines massiven Stücks (430), umfassend sukzessive:
- einen Webschritt (210) einer dreidimensionalen faserigen Struktur (300) per Weben eines Kettfadens und eines Schussfadens, wobei das genannte Weben ausgehend von metallischen Litzen (301, 302) realisiert wird, die als Kettfaden und Schussfaden verwendet werden, wobei die genannten metallischen Litzen (301, 302) durch eine Vielzahl von untereinander um die Längsachse der Litze verdrillten metallischen Fasern gebildet sind;
- einen isostatischen Heißpressschritt (230) der genannten faserhaltigen Struktur (300), der die Agglomeration der metallischen Litzen der genannten faserhaltigen Struktur (300) derart hervorruft, dass ein massives Stück (430) erhalten wird.

2. Realisierungsverfahren (200) gemäß Anspruch 1, **dadurch gekennzeichnet, dass** der genannte Webschritt (210) ausgehend von metallischen Litzen (301, 302) realisiert ist, die durch eine Vielzahl von metallischen Fasern gebildet sind, wobei der Durchmesser von jeder Faser unter 0,1 mm beträgt.

3. Realisierungsverfahren (200) gemäß einem der Ansprüche 1 bis 2, **dadurch gekennzeichnet, dass** der genannte Webschritt (210) ausgehend von metallischen Litzen (301, 302) mit einem Durchmesser von gleich oder größer als 0,5 mm realisiert ist.

4. Realisierungsverfahren (200) gemäß einem der Ansprüche 1 bis 2, **dadurch gekennzeichnet, dass** der genannte Webschritt (210) ausgehend von metallischen Litzen (301, 302) mit einem Durchmesser von gleich oder größer als 1 mm realisiert ist.

5. Realisierungsverfahren (200) gemäß einem der Ansprüche 1 bis 4, **dadurch gekennzeichnet, dass** der genannte Webschritt (210) ausgehend von metallischen Litzen (301, 302) realisiert ist, die durch eine Vielzahl von metallischen Fasern aus Titan oder durch eine Vielzahl von metallischen Fasern aus unterschiedlichen Materialien gebildet sind.

6. Realisierungsverfahren (200) gemäß einem der Ansprüche 1 bis 5, **dadurch gekennzeichnet, dass** der genannte Webschritt (210) ausgehend von metallischen Litzen (301, 302) realisiert ist, die durch eine Vielzahl von metallischen Fasern mit unterschiedlichen Durchmessern realisiert sind.

7. Realisierungsverfahren (200) gemäß einem der Ansprüche 1 bis 6, **dadurch gekennzeichnet, dass** vor dem genannten isostatischen Heißpressschritt (230) das genannte Verfahren einen Formgebungsschritt (230) der genannten faserigen Struktur (300) umfasst, wobei die genannte Formgebung manuell realisiert wird.

8. Realisierungsverfahren (200) gemäß Anspruch 7, **dadurch gekennzeichnet, dass** die Formgebung der genannten faserigen Struktur (300) bei der Einsetzung der genannten faserigen Struktur (300) in einem Werkzeug (400) realisiert wird.

9. Realisierungsverfahren (200) einer metallischen Verstärkung (30) der Schaufel einer Turbomaschine gemäß einem der Ansprüche 1 bis 8, **dadurch gekennzeichnet, dass** das genannte Verfahren (200) in dem genannten isostatischen Heißpressschritt (230) einen Reinigungsschritt (225) der genannten faserigen Struktur (300) umfasst.

10. Realisierungsverfahren (200) gemäß einem der Ansprüche 1 bis 9, **dadurch gekennzeichnet, dass** das genannte massive Stück (430) eine metallische Verstärkung (30) der Vorderkante oder der Hinterkante der Gebläseschaufel einer Turbomaschine oder einer Schraube ist.

## Claims

1. A method of production (200) of a solid part (430), said method comprising in sequence:
- a step (210) of weaving a three-dimensional fibrous structure (300) by weaving of warp thread and weft thread, said weaving being carried out with metal strands (301, 302) acting as warp thread and weft thread formed by a plurality of metal ends mutually twisted about the longitudinal axis of the strand;
- a step (230) of performing hot isostatic pressing on said fibrous structure (300) causing the agglomeration of the metal strands of said fibrous structure (300) so as to produce a solid part (430).

2. The method of production (200) according to claim 1, **characterised in that** said weaving step (210) is carried out with metal strands (301, 302) formed by a plurality of metal ends, wherein the diameter of each end is less than 0.1 mm.

3. The method of production (200) according to any one of claims 1 to 2, **characterised in that** said weaving step (210) is carried out with metal strands (301, 302) having a diameter equal to or greater than 0.5 mm.

4. The method of production (200) according to any one of claims 1 to 2, **characterised in that** said weaving step (210) is carried out with metal strands (301, 302) having a diameter equal to or greater than 1 mm.

5. The method of production (200) according to any one of claims 1 to 4, **characterised in that** said weaving step (210) is carried out with metal strands (301, 302) formed by a plurality of metal ends of titanium or by a plurality of metal ends of different materials.

6. The method of production (200) according to any one of claims 1 to 5, **characterised in that** said weaving step (210) is carried out with metal strands (301, 302) formed by a plurality of metal ends of different diameters.

7. The method of production (200) according to any one of claims 1 to 6, **characterised in that**, prior to said hot isostatic pressing step (230), said method comprises a step (230) for shaping said fibrous structure (300), said shaping being carried out manually.

8. The method of production (200) according to claim 7, **characterised in that** said shaping of said fibrous structure (300) is carried out when said fibrous structure (300) is put into place in a tool (400).

9. The method of production (200) of a metal reinforcement (30) of a turbine engine blade according to any one of claims 1 to 8, **characterised in that**, prior to said hot isostatic pressing step (230), said method (200) comprises a step for cleaning (225) said fibrous structure (300).

10. The method of production (200) according to any one of claims 1 to 9, **characterised in that** said solid part (430) is a metal reinforcement (30) of the leading edge or trailing edge of the fan blade of a turbine engine or propeller.
